# EUROPÄISCHE PATENTSCHRIFT

(11) **EP 1 256 413 B1**
(45) Veröffentlichungstag und Bekanntmachung des Hinweises auf die Patenterteilung: **03.05.2006**
(21) Anmeldenummer: 02009338.1
(22) Anmeldetag: 03.05.2002
(51) Int. Cl.: B23K 26/12, B23K 26/14, B23K 26/16

(54) **Werkzeugkopf zur Lasermaterialbearbeitung**
Laser machining head
Tête de travail au laser

(30) Priorität: 07.05.2001 DE 10123097
(43) Veröffentlichungstag der Anmeldung: 13.11.2002
(73) Patentinhaber: JENOPTIK Automatisierungstechnik GmbH, 07745 Jena (DE)
(72) Erfinder: REICHMANN, Lutz, 07745 Jena (DE); WOLF, Jürgen, 07646 Schlöben (DE); HAUER, Björn, 07745 Jena (DE); DENNER, Wolf-Jürgen, 07743 Jena (DE)
(74) Vertreter: Schaller, Renate

(56) Entgegenhaltungen:
- EP-A- 0 732 169
- DE-A- 3 923 829
- GB-A- 2 163 692
- US-A- 6 019 599
- PATENT ABSTRACTS OF JAPAN vol. 014, no. 305 (M-0992), 29. Juni 1990 (1990-06-29) & JP 02 099293 A (SHINKO KOGYO CO LTD), 11. April 1990 (1990-04-11)
- PATENT ABSTRACTS OF JAPAN vol. 011, no. 074 (M-568), 6. März 1987 (1987-03-06) & JP 61 229491 A (MITSUBISHI ELECTRIC CORP), 13. Oktober 1986 (1986-10-13)
- PATENT ABSTRACTS OF JAPAN vol. 1997, no. 11, 28. November 1997 (1997-11-28) & JP 09 192870 A (SUMITOMO HEAVY IND LTD), 29. Juli 1997 (1997-07-29)

## Beschreibung

Die Erfindung betrifft einen Werkzeugkopf, wie er für alle abtragenden oder trennenden Verfahren mittels Laser einsetzbar und wie er gattungsgemäß aus der JP 02099293 bekannt ist.

Bei abtragenden oder trennenden Verfahren mittels Laser werden in der Bearbeitungszone Reaktionsstoffe (Partikel) freigesetzt, die sich von der Werkstückoberfläche zum Teil explosionsartig diffus wegbewegen. Durch ihren Aufenthalt bzw. ihre Ablagerung im Bereich des Strahlungsverlaufes des Laserstrahlenbündels (optischer Kanal) können sie den Laserbearbeitungsprozess unkontrolliert beeinträchtigen.
Derartige Beeinträchtigungen können einerseits durch eine Änderung der Transmissionsverhältnisse im optischen Kanal und andererseits durch eine geometrische Begrenzung des optischen Kanals hervorgerufen werden.
Praktisch kommt es zur Verschlechterung der Transmissionsverhältnisse, wenn optisch wirksame Flächen verschmutzt werden oder die Luftwege im optischen Kanal durch Partikel angereichert werden, die eine erhöhte Absorption und Streuung der Laserstrahlung bewirken.
Die Gefahr der geometrischen Begrenzung des optischen Kanals besteht insbesondere, wenn durch Ablagerungen von Partikeln an eigentlich optisch nicht wirkenden Kanten und Flächen diese eine geometrische Ausdehnung in den optischen Kanal erfahren und damit optisch wirksam werden.
Aus den geschilderten Problemen ergeben sich zwangsläufig nachfolgende Forderungen an einen Werkzeugkopf mit Laserschneiddüse:

Verhinderung des Auftreffens von Partikeln auf die zur Werkstückoberfläche hin letzte optische Fläche.

Freihalten des Luftweges von Partikeln im optischen Kanal zwischen der letzten optischen Fläche und der Werkstückoberfläche, d.h. umgehender Abtransport mit deren Entstehung.

Aus dem Stand der Technik sind zu dieser Aufgabenstellung verschiedene Problemlösungen bekannt, welche die Forderungen mit unterschiedlichem Aufwand und Erfolg lösen.

Zur Vermeidung der Verschmutzung der für die Strahlformung erforderlichen Fokussieroptik, ist es bekannt, ein Schutzglas in Strahlungsrichtung hinter der Fokussieroptik anzuordnen. Das Schutzglas wird ausgetauscht, wenn seine Verschmutzung die Bearbeitung beeinträchtigt. Dies bedeutet einen sich zyklisch wiederholenden Zeit- und Materialaufwand. Um das Schutzglas länger sauber zu halten, ist es bekannt, die bei der Bearbeitung freigesetzten Partikel mit einem Gasstrom seitlich wegzublasen und dann abzusaugen (cross-jet-Prinzip). Die sich gegenüber der Achse des Laserstrahlenbündels stromabwärtsseitig befindenden Partikel können so sicher abtransportiert werden, während sich stromaufwärtsseitig befindende Partikel umgelenkt und an das Schutzglas geblasen werden können. Die Verschmutzung wird demnach nur verlangsamt, nicht aber sicher vermieden.
Um die Bearbeitungsfläche mit einem quer zum Laserstrahlenbündel gerichteten Gasstrom zu beaufschlagen und diesen auch wieder abzusaugen, bedarf es der Anordnung zumindest einer Gasdüse und einer Absaugeinrichtung quer zum Laserstrahlenbündel.
Eine solche Lösung erfordert, durch ihre ausgedehnte Konstruktion quer zum Laserstrahlenbündel, einen hohen Platzbedarf unmittelbar über der zu bearbeitenden Werkstückoberfläche und ist daher eingeschränkt auf die Bearbeitung von ebenen Werkstücken.

Einen geringeren Platzbedarf und eine bessere Vermeidung der Verschmutzung eines der Fokussieroptik nachgeordneten Schutzglases, sowie eine nahezu vollständige Absaugung der Partikel verspricht die im Gebrauchsmuster DE 295 04 457 U1 offenbarte Lösung.
Grundgedanke ist hier, die freigesetzten Partikel stets von der Achse des Laserstrahlenbündels weg aus dem optischen Kanal herauszuführen und das Eintreten von Reaktionsstoffen aus der Umgebung in den optischen Kanal zu verhindern. Dazu wird dem Schutzglas eine Düse nachgeordnet. Der über eine Einlassöffnung zugeführte Gasstrom wird durch die koaxiale Anordnung der Düse um die Achse des Laserstrahlenbündels in dessen Strahlungsrichtung geführt und schließt das Laserstrahlenbündel und somit den optischen Kanal zwischen der Austrittsöffnung der Düse und der Oberfläche des Werkstückes vollständig ein. Zur Absaugung des Gasstromes, einschließlich der mitgerissenen Partikel, ist die Düse von einem ringförmigen Absaugtrichter umschlossen. Der Gasstrom strömt bei einer derartigen Anordnung bis zum Auftreffen auf die Werkstückoberfläche im Wesentlichen in Achsrichtung des Laserstrahlenbündels und wird dann in radialer Richtung von der Achse weg umgelenkt.

Die aufgezeigte Lösung verhindert zwar die Verschmutzung des Schutzglases und sichert den schnellen Abtransport von Partikeln aus dem optischen Kanal, sie schafft jedoch unter Umständen ein neues Problem. Unter Umständen deshalb, weil es nur dann zum Problem wird, wenn der Durchmesser der Austrittsöffnung der Düse kleinst möglich gewählt sein soll.
Davon ausgehend, dass der Durchmesser der Austrittsöffnung der Düse möglichst klein sein soll, um durch eine hohe Strömungsgeschwindigkeit schon mit geringen Gasmengen eine dem Partikelflug entgegenwirkende, hohe kinetische Energie zu erzeugen, sollte der Durchmesser der Austrittsöffnung nur minimal größer dimensioniert werden, als der Durchmesser des optischen Kanals in dieser Ebene ist. Das heißt aber, das schon geringfügige Ablagerungen an der Austrittsöffnung zu einer unkontrollierten Bündelbegrenzung führen können und damit zu einer unkontrollierten Beeinflussung der auf die Werkstückoberfläche auftreffenden Laserstrahlungsleistung.

Wie sich praktisch gezeigt hat, lagern sich die Partikel sehr schnell sowohl in radialer als auch insbesondere in axialer Richtung zur Symmetrieachse der Düse an deren Austrittsöffnung an. Die im sauberen Zustand runde Austrittsöffnung "wächst" mit zunehmender Ablagerung von Partikeln trichterförmig in Strahlungsrichtung, wodurch es zu einer undefinierten Blendwirkung auf das Laserstrahlenbündel kommen kann.

Die gleichen Probleme könnten bei einer Lösung auftreten, wie sie in der DE 39 23 829 beschrieben ist. Hier ist der Optik ebenfalls eine das Laserstrahlenbündel koaxial umschließende Düse nachgeordnet, die allerdings zur Zuführung eines Reaktionsgases dienen soll. Die Düse wird von einer Absaughaube umschlossen, die eine Vielzahl von ringförmig angeordneten Einlassöffnungen in Nähe der Werkstückoberfläche und Auslassöffnungen nahe der Düse aufweist. Diese Konstruktion bewirkt Strömungsverhältnisse unter der Absaughaube, die insbesondere ein Austreten von Reaktionsstoffen verhindern soll, was im Wesentlichen dem Arbeitsschutz des Bedienpersonals dient.

In der DE 197 34 294 ist eine Absauganlage für eine Vorrichtung zur Laserbearbeitung, insbesondere zum Laserschweißen beschrieben. Zur Fokussieroptik sind hier eine innere und eine äußere Ringdüse koaxial angeordnet. Durch die innere Ringdüse wird das zum Schweißen notwendige Schutzgas zugeführt, während über die äußere Ringdüse die Absaugung der Reaktionsstoffe und des Schutzgases erfolgt. Es werden hier keine Maßnahmen getroffen, die eine Ablagerung von Reaktionsstoffen im optischen Kanal, der hier von der inneren Oberfläche der inneren Ringdüse umschlossen wird, verhindert.

Bei zusammenfassender Betrachtung des beschriebenen Standes der Technik zeigt sich die Anordnung einer das Laserstrahlenbündel (optischer Kanal) umschließenden gasführenden Düse als sehr geeignet, um eine Ablagerung von Partikeln auf der letzten Fläche der Fokussieroptik zu vermeiden. Um diese jedoch zur Erzeugung einer hohen Gasgeschwindigkeit optimal dimensionieren zu können, d.h. mit einer möglichst kleinen Austrittsöffnung, müssen Maßnahmen getroffen werden, die eine Ablagerung von Partikeln insbesondere an deren Austrittsöffnung verhindern.
Eine Möglichkeit besteht darin, den Partikelstrom von der Austrittsöffnung fern zu halten. Da der Verlauf des Partikelstromes neben den Stoßrichtungen beim Herauslösen der Partikel im Wesentlichen durch die Strömungsrichtung der Absaugung bestimmt wird, kann eine Verschmutzung der Austrittsöffnung weitestgehend verhindert werden, wenn, wie einleitend beschrieben, die Absaugung knapp oberhalb der Bearbeitungsfläche radial zur Strahlungsrichtung des Laserstrahlenbündels ausgerichtet wird. Zur Bearbeitung dreidimensionaler Oberflächen ist eine derartige Anordnung nicht geeignet. Vielmehr kommen nur Anordnungen in Frage, bei denen die Absaugeinrichtungen in axialer Richtung um den optischen Kanal angeordnet sind, damit der Werkzeugkopf in seiner Bewegungsfreiheit gegenüber dreidimensionalen Oberflächen nicht durch die Absaugeinrichtung eingeschränkt wird. Der Partikelstrom trifft damit auch auf die Austrittsöffnung und die angrenzenden Flächen der Düse.
Eine geeignete Lösung, in der Maßnahmen getroffen sind, die eine Anlagerung von Partikeln an der Austrittsöffnung und der angrenzenden Oberfläche der Düse verhindern ist in der JP 02 009 293 A aufgezeigt. Wie aus der Zeichnung zum Abstract deutlich erkennbar, umschließt ein zur Absaugeinrichtung gehörendes Rohr die Düse mit ihrer Austrittsöffnung koaxial. Der Umfang des Werkzeugkopfes in radialer Richtung wird dadurch deutlich vergrößert. Ein solcher Werkzeugkopf ist für die Bearbeitung von dreidimensionalen Oberflächen mit konkav gekrümmten Bereichen nur begrenzt verwendbar.
Ein Laserkopf zum Schweißen, bei dem über eine innere Düse, die den Laserstrahl umhüllt, eine Plasma bindendes Gas und über eine äußere, die innere Düse koaxial umschließende Düse ein Schutzgas auf ein Werkstück gerichtet wird ist in JP 61-229491 A (Abstract) beschrieben. Eine Absaugung ist nicht erwähnt.
In der EP 0 732 169 A wird ebenso in eine innere den Laserstahl umhüllende Düse ein Gas eingeleitet , welches durch eine äußere ringförmige Düse abgesaugt wird.
Auch in der GB 2163692 A ist ein Laserkopf mit einer inneren Düse beschrieben welche einen auf ein Werkstück gerichteten Laserstrahl umhüllt und mit der gleichzeitig ein Gasstrahl auf die Werkstückoberfläche gerichtet werden kann. Diese innere Düse ist von einer äußeren Düse koaxial umschlossen, die sowohl als zusätzliche Gasdüse oder aber als Absaugdüse betrieben werden kann. Insbesondere zum Laserschneiden wird ein Gasstrom über die innere Düse abgegeben, während insbesondere zum Laserschweißen ein über die äußere Düse gerichteter Gasstrom vorteilhaft ist.
Eine Absauganlage für die Laserbearbeitung von Werkstücken in Form einer äußeren Ringdüse, die eine innere Schutzgasführende Ringdüse koaxial umschließt, ist in der US 6,019,559 A offenbart.
In allen aus dem Stand der Technik aufgezeigten Lösungen , umschließen die Absaugdüsen, sofern vorhanden, innere Düsen ringförmig und bewirken damit eine umfängliche Ausdehnung des Laserkopfes in radialer Richtung, was die Verwendung bei der Bearbeitung dreidimensionaler Oberflächen begrenzt.

Der Erfindung liegt die Aufgabe zugrunde, einen Werkzeugkopf zur Lasermaterialbearbeitung mit einer gasführenden das Laserstrahlenbündel umschließenden Düse und einer Absaugeinrichtung zu schaffen, bei dem die Ablagerung von Partikeln an der Austrittsöffnung und der angrenzenden Oberfläche der Düse sicher verhindert wird und der geeignet ist, auch Werkstücke mit dreidimensionaler Oberflächengestalt zu bearbeiten.

Die Aufgabe der Erfindung wird für einen Werkzeugkopf gemäß dem Oberbegriffes des Anspruches 1 dadurch gelöst, dass die Absaugeinrichtung eine oder mehrere Absaugdüsen (12) aufweist, deren Eintrittsöffnungen (13) jeweils die Form eines Ringsegmentes aufweisen.

Vorteilhafte Ausführungen sind in den Unteransprüchen angegeben.

Die Erfindung soll nachfolgend an zwei Ausführungsbeispielen an Hand von Zeichnungen näher erläutert werden. Hierzu zeigen:
- Fig. 1: ein Schnittbild einer Seitenansicht eines ersten Werkzeugkopfes
- Fig. 2: ein Schnittbild einer Seitenansicht eines zweiten Werkzeugkopfes
- Fig. 3: eine Draufsicht auf den zweiten Werkzeugkopf
- Fig. 4: eine schematische Darstellung der Strömungsverhältnisse bei der Lasermaterialbearbeitung mit einem Werkzeugkopf gemäß dem Stand der Technik
- Fig. 5: eine schematische Darstellung der Strömungsverhältnisse bei der Lasermaterialbearbeitung mit einem erfindungsgemäßen Werkzeugkopf

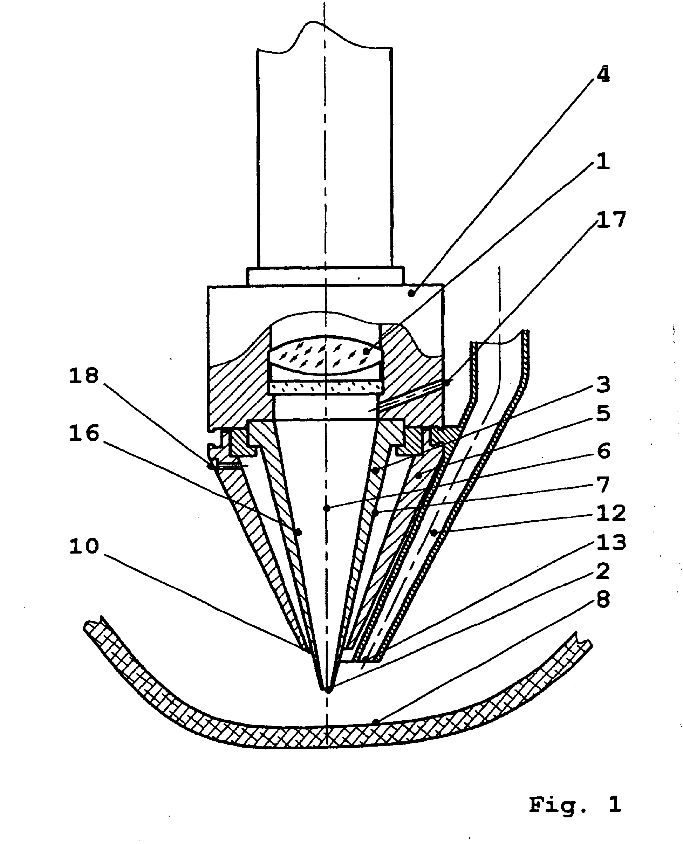

Der in einem ersten Ausführungsbeispiel beschriebene Werkzeugkopf, dargestellt in der Fig.1, besteht gleich derartigen aus dem Stand der Technik gattungsgleichen Werkzeugköpfen im Wesentlichen aus einer in einem Gehäuse 4 gefassten Fokussieroptik 1, über die ein Laserstrahlenbündel auf die zu bearbeitende Werkstückoberfläche 8 fokussiert wird. Zur Vermeidung der Verschmutzung der Fokussieroptik 1 durch bei der Laserbearbeitung freigesetzte Partikel ist der Fokussieroptik 1 in Strahlungsrichtung des Laserstrahlenbündels eine Düse 3 so nachgeordnet, dass die Symmetrieachse der Düse 3 mit der optischen Achse 6 der Fokussieroptik 1 zusammenfällt. Die Düse 3 ist, wie aus dem Stand der Technik bekannt, ein beidseitig offenes, kegelförmiges Rohr, dessen erstes Ende mit der Fokussieroptik 1 gasdicht verbunden ist und dessen Durchmesser in jeder radialen Ebene größer als der Bündelquerschnitt des Laserstrahlenbündels (optischer Kanal) ist, damit die Düse 3 keine Blendwirkung hervorruft. In der Mantelfläche der Düse 3 befindet sich nahe dem ersten Ende mindestens eine Gaszuführöffnung 17, über die während des Bearbeitungsprozesses eine Gasmenge in die Düse 3 gedrückt wird. Die Düsenform und die beschriebene Anordnung der Düse 3 zum Laserstrahlenbündel bewirken eine Gasströmung in Strahlungsrichtung (Freistrahl) bis hin zum Auftreffen auf die Werkstückoberfläche 8. Um mit einer möglichst geringen Gasmenge an der Austrittsöffnung 2 der Düse 3, die vom zweiten Ende des die Düse 3 bildenden Rohres gebildet wird, eine möglichst hohe Strömungsgeschwindigkeit zu erreichen, soll die Austrittsöffnung 2 einen möglichst kleinen Durchmesser aufweisen. An dieser Stelle kommt es zum ersten Unterschied zu den gattungsgleichen Werkzeugköpfen, beschrieben im Stand der Technik. Da die bekannten Lösungen, wie in der Beschreibung bereits dargelegt, sämtlich keine Maßnahmen treffen, die eine Ablagerung von Partikeln (Sedimentation) an der Austrittsöffnung 2 vermeiden, muss man davon ausgehen, dass bei diesen Lösungen die Austrittsöffnung 2 der Düse 3 gezielt deutlich größer dem optischen Kanal gewählt wird, damit Ablagerungen, die eine Verkleinerung oder Verlagerung der Austrittsöffnung 2 hervorrufen, nicht bündelbegrenzend wirken.
Zur Vermeidung solcher Ablagerungen weist der erfindungsgemäße Werkzeugkopf ein um die Düse 3 koaxial angeordnetes Rohr 5 auf, welches unter Mitwirkung der äußeren Düsenmantelfläche 7 wie eine Ringdüse wirkt. Das erste Ende des Rohres 5 ist gasdicht mit der äußeren Düsenmantelfläche 7 verbunden. Ein über eine im Rohrmantel befindliche Einlassöffnung 18 eingeleitetes Gas wird somit zum zweiten Ende des Rohres 5 geführt. Dieses ist durch die im Inneren angeordnete Düse 3 auf eine ringförmige Auslassöffnung 10 reduziert. Erfindungswesentlich ist, dass die ringförmige Auslassöffnung 10 zur Austrittsöffnung 2 zurückgesetzt ist, d.h. in Strahlungsrichtung vor der Austrittsöffnung angeordnet ist. Das aus der ringförmigen Auslassöffnung 10 austretende Gas strömt dadurch bis hin zur Austrittsöffnung 2 an der freiliegenden äußeren Düsenmantelfläche 7 entlang und verhindert so die Ablagerung von Partikeln.
In diesem ersten beschriebenen Ausführungsbeispiel ist die Düse 3 aus einem Stück gefertigt. Fertigungstechnisch am einfachsten lassen sich hier die Mantelflächen der Düse 3 und des Rohres 5 fertigen, wenn sie jeweils den gleichen Kegelwinkel über ihre gesamte Länge aufweisen. Dabei können sich die Kegelwinkel der inneren Düsenmantelfläche 16, der äußeren Düsenmantelfläche 7 und der inneren Rohrmantelfläche 9 unterscheiden.
Die Beschreibung der Ausführung der Absaugeinrichtung, von der nur die Absaugdüse 12 dargestellt ist, erfolgt an späterer Stelle.

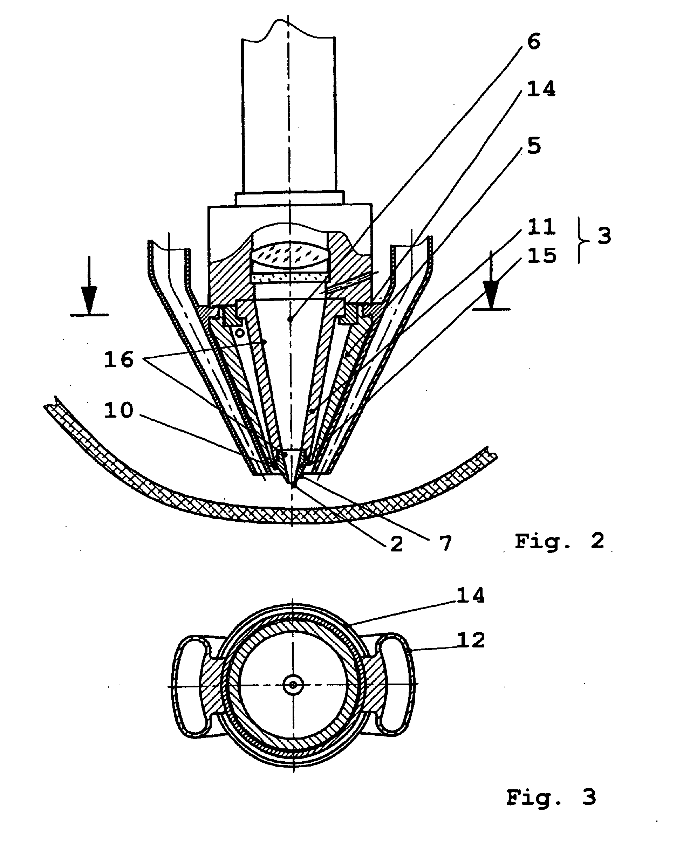

In einem zweiten Ausführungsbeispiel, dargestellt in Fig. 2 und 3, ist die Düse 3 zweiteilig ausgeführt, bestehend aus dem Düsengrundkörper 11 und der Düsenspitze 15. Die zweiteilige Ausführung der Düse 3 ermöglicht ein Austauschen der Düsenspitze 15 z.B. nach Beschädigung. Diese Konstruktion bietet außerdem die Möglichkeit, auf einfache Weise die äußere Düsenmantelfläche 7 im Bereich um die Austrittsöffnung 2 problemlos mit einem zur Achse 6 größeren Kegelwinkel zu fertigen, so dass die aus dem Rohr 5 austretende ringförmige Gasströmung bereits knapp unter der Austrittsöffnung 2 auf die aus der Düse austretende Gasströmung auftrifft. Die Düsenspitze 15 wird damit auch im unmittelbaren Randbereich zur Austrittsöffnung 2 sicher geschützt. Auf die ebenfalls zum Werkzeugkopf gehörende Absaugeinrichtung soll an späterer Stelle der Beschreibung genauer eingegangen werden.
Die äußere Düsenmantelfläche 7 muss ebenso wie die innere Düsenmantelfläche 16 im Bereich der Austrittsöffnung 2 nicht zwingend kegelförmig ausgebildet sein, was eine übliche Flächenform für eine Düse ist. Erfindungswesentlich ist lediglich, dass die innere Düsenmantelfläche 16 durch die Gasströmung in der Düse 3 und die äußere Düsenmantelfläche 7 durch die aus dem Rohr 5 austretende Gasströmung umströmt wird.
Beide Gasströmungen weisen im Wesentlichen die gleiche Strömungsrichtung auf, so dass die erfindungsgemäß zusätzliche Gasströmung, unterstützend für die aus der Düse 3 austretende Gasströmung, dem Partikelflug entgegenwirkt.

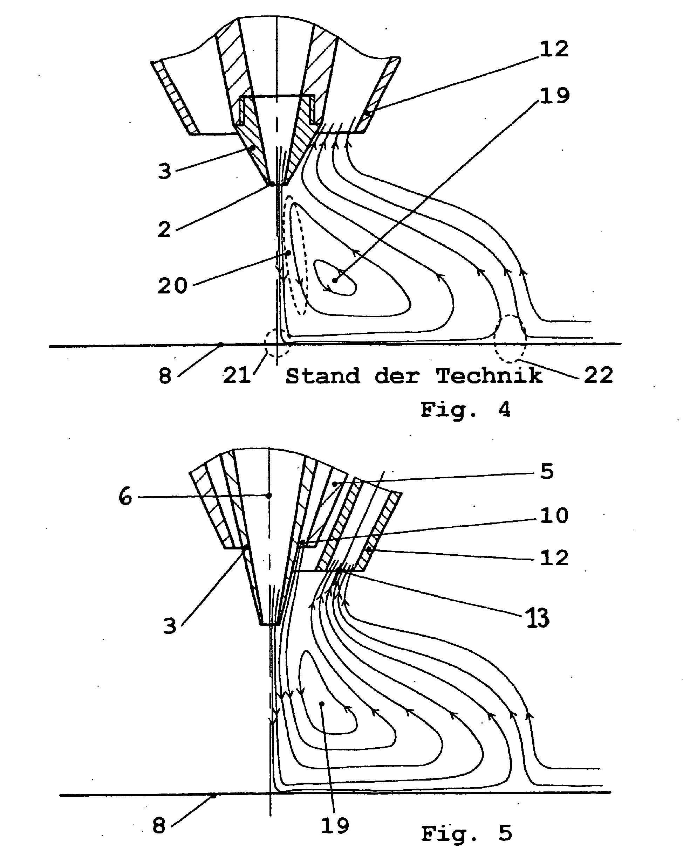

Fig. 4 zeigt die Strömungsverhältnisse eines Werkzeugkopfes nach dem Stand der Technik. Dargestellt sind die Stromlinien in einer Schnittebene durch die Achse 6 eines Werkzeugkopfes. Aus der Düse 3 tritt ein Gasstrom mit hoher Geschwindigkeit aus. Dieser strömt als Freistrahl in Richtung der Bearbeitungsstelle auf dem Werkstück (Werkstückoberfläche 8). Am Rand des Freistrahls bildet sich ein Unterdruckgebiet 20 aus, welches aus der hohen Geschwindigkeit des Freistrahls resultiert. Dadurch wird das Gas von außen angesaugt und in den Strahl eingemischt. Der axiale Freistrahl trifft im Bearbeitungspunkt auf das Werkstück, wo er in radialer Richtung abgelenkt wird. Strömungsmechanisch stellt dieser Punkt den Staupunkt 21 dar. Die Strömung liegt bis zu einem Ablösepunkt 22 an der Oberfläche des Werkstücks an. Die Strömungsgeschwindigkeit nimmt vom Staupunkt 21 zum Ablösepunkt 22 ab. Vom Ablösepunkt 22 an wird das Gas zusammen mit radial nach innen strömender Luft in die ringförmige Absaugdüse 12 eingesaugt.
Durch diese Strömungsverhältnisse bedingt bildet sich ein Wirbel 19 aus. Dieser Wirbel 19 muss nicht unbedingt radialsymmetrisch sein. Der Ablösepunkt 22 kann zum Beispiel durch die Kontur des Werkstückes verlagert sein. Für die nachfolgende Darstellung spielt das jedoch keine Rolle.
Im Staupunkt 21 wird die Gasströmung mit Partikeln beladen, die bei der Laserbearbeitung entstehen. Die Partikel erfahren in der Strömung eine mittlere Kraft in Richtung der Stromlinien. Allerdings gilt das nur für den zeitlichen Mittelwert. Tatsächlich werden die Partikel durch die Turbulenz der Strömung verwirbelt. Das bedeutet, dass die Partikel ungeordnete Bewegungen in der Strömung ausführen, die um so größer sind, je leichter die Teilchen sind. Zudem werden die Partikel von der Bearbeitungsstelle mit einer zufällig verteilten Geschwindigkeit emittiert. Dadurch ist es zu erklären, dass der Wirbel 19 der Gasströmung mit Partikeln beladen wird und immer wieder Partikel in den axialen Gasstrahl eingemischt werden, die die Laserstrahlung absorbieren oder reflektieren, so dass die Laserstrahlung nur eingeschränkt zur Bearbeitung des Werkstückes ausgenutzt werden kann. Weiterhin lagern sich immer wieder Partikel aus dem Wirbel 19 an der Düse 3 ab. Diese Sedimentation ist in dem Gebiet um die Austrittsöffnung 2 besonders effektiv, da dort die Stromlinien eine starke Krümmung aufweisen. Auf die Partikel wirkt dann eine starke Zentrifugalkraft, die die Partikel in Richtung zur Düse 3 treibt.
Ein großer Teil der Partikel trifft auf den Schneiddüsenkopf, wo sich eine Sedimentationszone ausbildet. Dadurch ist in kurzen Intervallen eine Reinigung des Düsenkopfes von anhaftenden Partikeln erforderlich.

In Fig. 5 sind die Strömungsverhältnisse der erfindungsgemäßen Vorrichtung dargestellt. Die Darstellung beinhaltet die Stromlinien in einer Schnittebene durch die Achse 6 des Werkzeugkopfes. Der wesentliche Unterschied zum Stand der Technik nach Fig. 4 besteht darin, dass sich zwischen der Düse 3 und der Absaugdüse 12 die ringförmige Auslassöffnung 10 eines Rohres 5 befindet, aus der Frischgas ausströmt. Die Strömungsgeschwindigkeit des Gases aus der ringförmigen Auslassöffnung 10 ist klein gegenüber der Strömungsgeschwindigkeit des Freistrahls aus der Düse 3. Das Frischgas aus der Auslassöffnung 10 strömt zunächst an der Außenseite der Düse 3 entlang bis zu deren Austrittsöffnung 2. Dann wird es vom Freistrahl der Düse 3 angesaugt und strömt mit diesem zusammen in axialer Richtung auf die Werkstückoberfläche 8. Der Frischgasstrom schirmt dabei den Wirbel 19 sowohl gegenüber der Düse 3 als auch gegenüber dem Freistrahl ab. Für die Abschirmung der Düse 3 ist es von Bedeutung, dass die ringförmige Auslassöffnung 10 gegenüber der Austrittsöffnung 2 der Düse 3 zurückgesetzt ist.
Der Wirbel 19 wird auch bei der erfindungsgemäßen Vorrichtung mit Partikeln beladen. Allerdings wird im Unterschied zum Stand der Technik (Fig. 4) kein verschmutztes Gas aus dem Wirbel 19 in den Freistrahl eingemischt, weil das Frischgas vom Freistrahl angesaugt wird, nachdem es an der Außenseite der Düse 3 bis zu deren Austrittsöffnung 2 geströmt ist. Dadurch wird die Transparenz des Freistrahls nicht verschlechtert und folglich wird die Energie des Laserstrahls besser für die Bearbeitung ausgenutzt. Da der Gasstrom aus der ringförmigen Auslassöffnung 10 an der Außenseite der Düse 3 anliegt, strömt immer Frischgas an der Düse 3 entlang, wodurch das Problem der Sedimentation vermieden wird. Keine oder nur noch ganz wenige Partikel treffen auf die Düse 3, so dass kaum noch eine Sedimentation auftritt.
Bei der Darstellung der Strömungsverhältnisse in Fig. 5 bedurfte es der Andeutung der zur Absaugeinrichtung gehörenden Absaugdüsen 12, die nachfolgend genauer beschrieben werden sollen.
Die Absaugeinrichtung kann eine oder mehrere Absaugdüsen 12 umfassen, deren Eintrittsöffnungen 13 in Strahlungsrichtung vor der Austrittsöffnung 2 angeordnet sind. Insbesondere bei der Bearbeitung von Werkstückoberflächen 8, die Freiformflächen mit kleinen Krümmungsradien darstellen, ist es erforderlich, dass die radiale Ausdehnung des Werkzeugkopfes möglichst gering ist, um den erforderlichen Bewegungsfreiraum zu haben, dass die Achse 6 der Düse 3 permanent in Richtung der Flächennormale im jeweiligen Bearbeitungspunkt auf die Werkzeugoberfläche gerichtet werden kann. Im zweiten Ausführungsbeispiel, an Hand von Fig. 2 und 3 erläutert, gehören zur Absaugeinrichtung zwei diametral zur Achse 6 angeordnete Absaugdüsen 12, deren Austrittsöffnungen 2 in Form eines Ringsegmentes *(Fig.3)* nur einen begrenzten Winkelbereich um das Rohr 5 abdecken. Damit bleibt die radiale Ausdehnung des Werkzeugkopfes in senkrechter Richtung zur Verbindungslinie der Flächenmittelpunkte der Eintrittsöffnungen 13 auf den Durchmesser des Rohres 5 beschränkt. Abhängig von den Krümmungsradien der Werkstückoberfläche 8 kann das Werkstück zum Werkzeugkopf bzw. umgekehrt so geführt werden, dass die Relativbewegung ungehindert ausgeführt werden kann. Die beiden Absaugdüsen 12 sind an einem Trägerring 14 über eine lösbare Verbindung befestigt. Durch Lösung der Verbindung können die Absaugdüsen 12 über einen Winkelbereich von nahezu 180° um die Düse 3 geschwenkt werden, womit eine konstruktive Anpassung an die Gegebenheiten der Werkstückoberfläche 8 ermöglicht wird. Es ist auch vorstellbar, die Absaugdüsen 12 während der Lasermaterialbearbeitung motorisch angetrieben zu verstellen.

Im ersten Ausführungsbeispiel, dargestellt in Fig. 1, soll an dem Trägerring 14 nur eine Absaugdüse angebracht sein. Sie wird in Abhängigkeit von der Kontur der zu bearbeitenden dreidimensionalen Oberfläche so zur Richtung der Relativbewegung zwischen Werkzeugkopf und Werkstück positioniert, dass eine ungestörte Bearbeitung möglich ist.

### Aufstellung der verwendeten Bezugszeichen

- 1: Fokussieroptik
- 2: Austrittsöffnung
- 3: Düse
- 4: Gehäuse
- 5: Rohr
- 6: Achse
- 7: äußere Düsenmantelfläche
- 8: Werkstückoberfläche
- 9: innere Rohrmantelfläche
- 10: ringförmige Auslassöffnung
- 11: Düsengrundkörper
- 12: Absaugdüse
- 13: Eintrittsöffnung
- 14: Trägerring
- 15: Düsenspitze
- 16: innere Düsenmantelfläche
- 17: Gaszuführöffnung
- 18: Einlassöffnung
- 19: Wirbel
- 20: Unterdruckgebiet
- 21: Staupunkt
- 22: Ablösepunkt

## Patentansprüche

1. Werkzeugkopf zur Lasermaterialbearbeitung mit einer Fokussieroptik (1), die ein von einem Laser erzeugtes Laserstrahlenbündel auf eine zu bearbeitende Werkstückoberfläche (8) richtet, einer gasführenden, das Laserstrahlenbündel mit der optischen Achse (6) koaxial umschließenden Düse (3), die eine um die Achse (6) koaxial angeordnete Austrittsöffnung (2) aufweist, aus der ein Freistrahl austritt, wobei die Düse (3) von einem Rohr (5) koaxial umschlossen wird, dessen Innendurchmesser in jeder zur Achse (6) radialen Ebene größer als der Außendurchmesser der Düse (3) ist und das erste Ende des Rohres (5) gasdicht mit der äußeren Düsenmantelfläche (7) verbunden ist,
in dem Rohr (5) eine Einlassöffnung (18) vorhanden ist, durch welche ein Gas in den sich zwischen der äußeren Düsenmantelfläche (7) und der inneren Rohrmantelfläche (9) bildenden Zwischenraum eingebracht wird,
das zweite Ende des Rohres (5) durch die äußere Düsenmantelfläche (7) auf eine ringförmige Auslassöffnung (10) beschränkt ist,
die ringförmige Auslassöffnung (10) gegenüber der Austrittsöffnung (2) zurückgesetzt ist, d.h. in Strahlungsrichtung vor der Austrittsöffnung angeordnet ist, wodurch das Gas die freiliegende äußere Düsenmantelfläche (7) bis hin zur Austrittsöffnung (2) in axialer Richtung umströmt und anschließend den aus der Düse (3) austretenden Freistrahl umhüllend zur Werkstückoberfläche (8) strömt und einer Absaugeinrichtung,
**dadurch gekennzeichnet,**
**dass** die Absaugeinrichtung eine oder mehrere Absaugdüsen (12) aufweist, deren Eintrittsöffnungen (13) jeweils die Form eines Ringsegmentes aufweisen, und in gleicher Ebene und gleichem Abstand zum Achse (6) um das Rohr (5) angeordnet sind, um den Werkzeugkopf nur in einem begrenzten Winkelbereich radial *auszudehnen.*

2. Werkzeugkopf nach Anspruch 1, **dadurch gekennzeichnet,**
**dass** die Absaugdüsen (12) um das Rohr (5) schwenkbar angeordnet sind, um den Werkzeugkopf an den Bewegungsfreiraum anzupassen, der durch die Geometrie der Werkstückoberfläche (8) vorgegeben ist.

3. Werkzeugkopf nach Anspruch 1, **dadurch gekennzeichnet,**
**dass** die Eintrittsöffnungen (13) in ihrer Winkellage zur Achse (6) verstellbar sind, um in Ausnutzung des Bewegungsfreiraumes die Eintrittsöffnungen (13) in einem möglichst großen Winkel zur Achse (6) anstellen zu können.

4. Werkzeugkopf nach Anspruch 1, **dadurch gekennzeichnet,**
**dass** die Absaugdüsen (12) an einem gemeinsamen Trägerring (14) befestigt sind, der mit einem Motor verbunden ist, um die Absaugdüsen (12) während des Bearbeitungsprozesse umzupositionieren.

## Claims

1. Tool head for laser material processing, comprising focusing optics (1) which direct a laser ray bundle generated by a laser onto a workpiece surface (8) to be processed; a gas-carrying nozzle (3), which coaxially encloses the laser ray bundle with the optical axis (6) and has an exit opening (2) arranged coaxially around the axis (6), from which opening a free jet exits, wherein said nozzle (3) is coaxially enclosed by a tube (5) whose inner diameter is greater, in each plane extending radially of the axis (6), than the outer diameter of the nozzle (3) and the first end of the tube (5) is gas-tightly connected to the outer circumferential surface (7) of the nozzle,
the tube (5) has an inlet opening (18) through which a gas is introduced into the intermediate space forming between the outer circumferential surface (7) of the nozzle and the inner circumferential surface (9) of the tube,
the second end of the tube (5) is limited to a ring-shaped outlet opening (10) by the outer circumferential surface (7) of the nozzle,
the ring-shaped outlet opening (10) is set back relative to the exit opening (2), i.e. it is arranged preceding the exit opening in the radiation direction, so that the gas flows axially around the exposed outer circumferential surface (7) of the nozzle up to the exit opening (2) and then flows to the workpiece surface (8) while enclosing the free jet exiting from the nozzle (3); and an exhaust system,
**characterised in that**
the exhaust system comprises one or more exhaust nozzles (12) whose entrance openings (13) each have the shape of a ring segment and are arranged in the same plane and at the same distance from the axis (6) in order to extend the tool head radially only within a limited angular range.

2. Tool head according to claim 1, **characterised in that** the exhaust nozzles (12) are arranged so as to be pivotable about the tube (5) in order to adapt the tool head to the space of free movement which is given by the geometry of the workpiece surface (8).

3. Tool head according to claim 1, **characterised in that** the entrance openings (13) are adjustable in their angular positions relative to the axis (6) in order to allow the entrance openings (13) to be positioned at a maximum angle to the axis (6) utilizing the space of free movement.

4. Tool head according to claim 1, **characterised in that** the exhaust nozzles (12) are mounted to a common support ring (14), which is connected to a motor in order to reposition the exhaust nozzles (12) during the processing process.

## Revendications

1. Tête d'outil pour l'usinage de matière au laser avec une optique de focalisation (1) qui dirige un faisceau de rayons laser généré par un laser sur une surface de pièce à usiner (8), une buse de passage de gaz qui entoure coaxialement le faisceau de rayons laser avec l'axe optique (6) et comporte un orifice de sortie (2) disposé coaxialement autour de l'axe (6), duquel un jet libre sort, la buse (3) étant entourée coaxialement d'un tube (5) dont le diamètre intérieur est supérieur au diamètre extérieur de la buse (3) à chaque niveau radial à l'axe (6) et la première extrémité du tube (5) étant reliée de manière étanche au gaz à la surface extérieure de l'enveloppe de la buse (7),
un orifice d'entrée (18) à travers lequel un gaz est introduit dans l'espace intermédiaire qui se forme entre la surface extérieure de l'enveloppe de la buse (7) et la surface intérieure de l'enveloppe du tube (9) se trouvant dans le tube (5),
la deuxième extrémité du tube (5) étant limitée à un orifice d'échappement annulaire (10) par la surface extérieure de l'enveloppe de la buse (7) ,
l'orifice d'échappement annulaire (10) étant en retrait par rapport à l'orifice de sortie (2), c.-à-d. disposé devant l'orifice de sortie dans le sens du rayonnement, grâce à quoi le gaz contourne la surface extérieure dégagée de l'enveloppe de la buse (7) dans le sens axial jusqu'à l'orifice de sortie (2) puis passe vers la surface de la pièce à usiner (8) en enveloppant le jet libre qui sort de la buse (3) et avec un dispositif d'aspiration,
**caractérisée en ce que**
le dispositif d'aspiration comporte une ou plusieurs buses d'aspiration (12) dont chaque orifice d'entrée (13) a la forme d'un segment annulaire et est disposé autour du tube (5) au même niveau et avec le même écart par rapport à l'axe (6), pour n'étendre la tête d'outil radialement que dans une zone d'angle limitée.

2. Tête d'outil selon la revendication 1, **caractérisée en ce que**
les buses d'aspiration (12) sont disposées de manière à pouvoir pivoter autour du tube (5), afin d'adapter la tête d'outil à l'espace de liberté de mouvement donné de par la géométrie de la surface de la pièce à usiner (8).

3. Tête d'outil selon la revendication 1, **caractérisée en ce que**
la position angulaire par rapport à l'axe (6) des orifices d'entrée (13) est réglable, afin de pouvoir rapprocher les orifices d'entrée (13) avec un angle le plus grand possible par rapport à l'axe (6) en exploitant l'espace de liberté de mouvement.

4. Tête d'outil selon la revendication 1, **caractérisée en ce que**
les buses d'aspiration (12) sont fixées sur un anneau de support commun (14) qui est relié à un moteur qui permet de positionner les buses d'aspiration (12) pendant le processus d'usinage.
